# EUROPEAN PATENT APPLICATION

(11) **EP 0 910 189 A2**
(43) Date of publication of application: **21.04.1999**
(21) Application number: 98119406.1
(22) Date of filing: 14.10.1998
(51) Int. Cl.: H04J 3/06, H04J 3/14

(54) **Network synchronization for SDH/SONET**

(30) Priority: 15.10.1997 JP 280980/97
(71) Applicant: NEC CORPORATION, Tokyo (JP)
(72) Inventor: Yazaki, Masahiro, Minato-ku, Tokyo (JP)
(74) Representative: Baronetzky, Klaus, Dipl.-Ing.

(57) **Abstract**

In a synchronous network composed of a plurality of nodes (NODE1-NODE4) that are connected in ring network topology and have unique codes respectively assigned thereto, stable and reliable synchronization and the simplified timing design can be easily achieved. At each of the nodes, a signal having a unique code for identifying a source node (NODE1, NODE3) of a current synchronization clock is transmitted to an adjacent node. A local clock of the node is selected from a plurality of clocks depending on whether a unique code assigned to the node is identical to the unique code included in a received signal.

## Description

The present invention generally relates to synchronous network systems conforming to standards such as Synchronous Optical Network (SONET) or Synchronous Digital Hierarchy (SDH) and in particular to network synchronization techniques thereof.

Synchronization is a key technology of SONET and SDH, and is predicted on the availability of clocks that are traceable to one or more extremely precise references. Local clock is directly available from the precise clocks or is extracted from the signal carried on fiber trunks terminating on network elements.

In the case where two adjacent nodes extract their local clocks from the signals received from each other, however, timing loop is formed to cause clock oscillation which may result in node malfunctions. Therefore, the route for synchronization clock within the synchronous network must be designed to avoid causing the timing loop. In other words, it is necessary to design the synchronization timing with every conceivable defect such as LOS (Loss of Signal), AIS (Alarm Indication Signal) and LOF (Loss of Frame alignment).

However, since the synchronous network system composed of SOH/SONET equipment has increased in complexity, the timing design requires a large number of steps to avoid causing the timing loop and therefore becomes very complicated. In other words, it is very difficult to achieve the perfect timing design.

Further, the conventional timing design using bits 5 to 8 of byte S1 which are allocated for Synchronization Status Messages (SSM) may causes a case where the synchronous network system cannot ensure the network synchronization as described hereinafter.

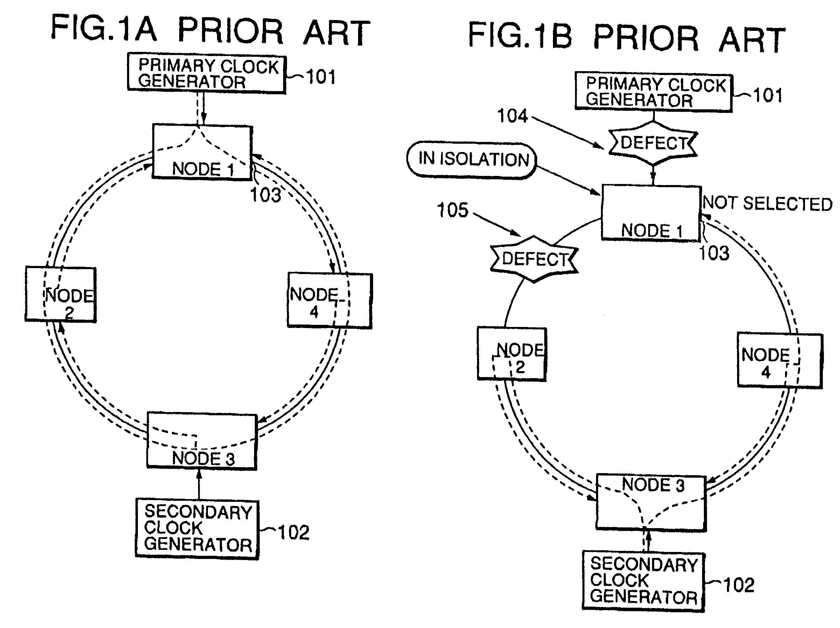

For example, consider a ring network composed of four nodes NODE1-NODE4 as shown in Figs. 1A and 1B, wherein the first node NODE1 and the third node NODE3 are provided with a primary clock generator 101 and a secondary clock generator 102, respectively.

Referring to Fig. 1A, when the ring network is normally operating, the primary clock generator 101 provides the network timing that is transferred counterclockwise in the ring network: NODE1→ NODE2→ NODE3→ NODE4 as shown by dashed lines. More specifically, in each of nodes NODE2-NODE4, its local clock is extracted from the signal received from the upstream node in the counterclockwise direction referring to bits 5 to 8 of the byte S1. In the case of the first node NODE1 connected to the primary clock generator 101, contrarily, its local clock is directly available from the primary clock generator 101. That is, the local clock is not extracted from the signal received from the fourth node NODE4 through the inter-node trunk terminating on the network element 103 of the first node NODE1.

When defects 104 and 105 occur between the primary clock generator 101 and the first node NODE1 and between the first and second nodes NODE1 and NODE2 as shown in Fig. 1B, the first node NODE1 detects the defects 104 and 105 and the second rode NODE2 detects the defect 105. In this case, the secondary clock generator 102 provides the network synchronization instead of the primary clock generator 101 and thereby the second and fourth nodes NODE2 and NODE4 can operate in synchronization with the secondary clock as shown by dashed lines in Fig. 1B.

However, the first node NODE1 cannot be synchronized with the secondary clock because the first node NODE1 is designed not to select the signal received from the fourth node NODE4 to recover its local clock. Therefore, the first node NODE1 is isolated from the network synchronization provided by the secondary clock generator 102.

When network synchronization is not successfully established in the network system, noises such as jitter and wander are developed to degrade the quality of the signal. Although the network elements are designed to resist noises to some extent, noises exceeding a certain limit may cause line-noise problems.

An object of the present invention is to provide a synchronizaticn method for a synchronous network system which can provide simplified timing design with a reduced number of steps.

Another object of the present invention is to provide a synchronous network system which can achieve network synchronization with stability and reliability even when a healing mechanism is activated due to the occurrence of defects.

According to the present invention, in a network synchronization method for a synchronous network comprising a plurality of nodes which are connected in a predetermined network topology and have unique codes respectively assigned thereto, at each of the nodes, a signal is transmitted to the synchronous network, the signal having a unique code for identifying a source node of a current synchronization clock. At each of the node, a local clock is selected from a plurality of clocks depending on whether a unique code assigned to the node is identical to the unique code included in a received signal.

A clock extracted from the received signal is not selected as the local clock when the unique code assigned to the node is identical to the unique code included in the received signal. The clock extracted from the received signal is selected as the local clock when the unique code assigned to the node is not identical to the unique code included in a received signal.

A transmitted signal may have a message indicating a quality level of an extracted clock thereof in addition to the unique code. Each of the nodes selects the local clock depending on the quality level of the received signal.

According to the present invention, stable and reliable network synchronization can be easily performed only by transferring the unique code for identifying a clock-supplying node and checking it at each node. Therefore, compared with the prior art, the timing design of the network becomes very easy and the number of timing design steps is dramatically reduced. In addition, even in the case of defect occurrence, any network element is prevented from isolating from the network synchronization, resulting in improved network stability and reliability.
Fig. 1A is a block diagram showing the synchronization clock route in a conventional ring network when normally operating;
Fig. 1B is a block diagram showing the changed synchronization clock route in the conventional ring network when defects occur;
Fig. 2A is a block diagram showing the synchronization clock route in a ring network according to an embodiment of the present invention when normally operating;
Fig. 2B is a block diagram showing the changed synchronization clock route in the ring network according to the embodiment when defects occur;
Fig. 3A is a diagram showing the allocation of bytes in a transport overhead;
Fig. 3B is a diagram showing the bit allocation of S1 byte allocated in the transport overhead;
Fig. 4 is a block diagram showing the circuit configuration of a node in the embodiment;
Fig. 5 is a block diagram showing another example of a synchronization clock selector provided in the node; and
Fig. 6 is a flow chart showing an operation of each node in the embodiment.

Hereinafter, taking a 4-node ring network as an example for simplicity, the details will be described.

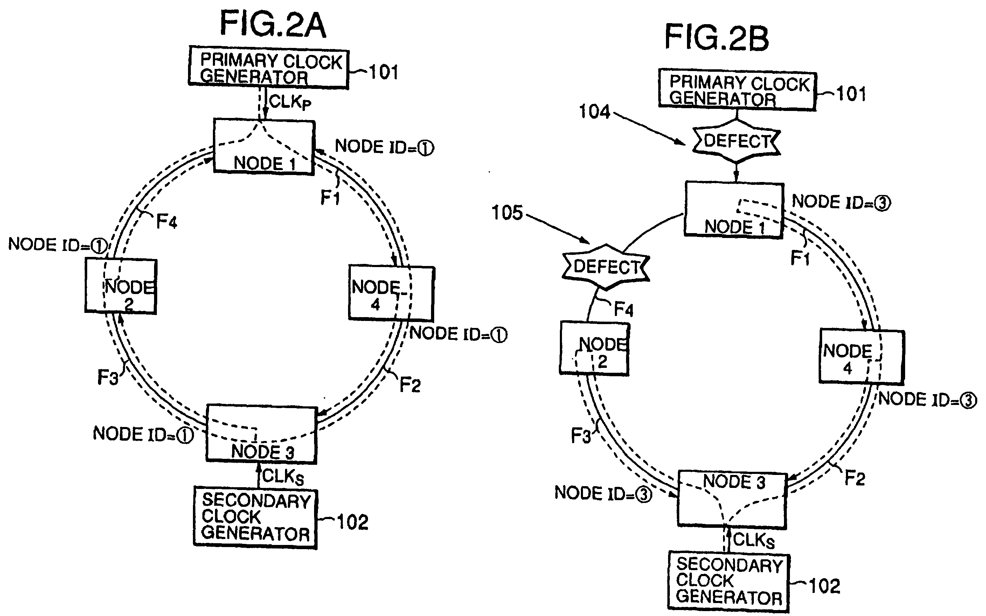

Referring to Figs. 2A and 2B, a ring network is composed of nodes NODE1, NODE2, NODE3 and NODE4 which are connected respectively through bidirectional optical transmission lines F₁-F₄ in a ring topology. Further, it is assumed that the respective nodes NODE1, NODE2, NODE3 and NODE4 have predetermined node identification codes ①, ②, ③, and ④ assigned thereto. The first node NODE1 and the third node NODE3 are provided with a primary clock generator 101 and a secondary clock generator 102, respectively. The primary clock generator 101 and the secondary clock generator 102 can provide a precise clock reference that can be used to provide the network synchronization of the ring network.

As shown in Fig. 2A, when the ring network is normally operating, the primary clock generator 101 provides the network timing that flows counterclockwise in the ring network: NODE1→ NODE2→ NODE3→ NODE4 as shown by dashed lines. More specifically, the first node NODE1 uses the primary clock CLKₚ to obtain its local clock and transmits signals to the second and fourth nodes NODE2 and NODE4 according to the local clock. Since the primary clock CLKₚ is used to provide the network synchronization, the first node NODE1 produces a transmitted signal having the node identification NODE-ID ① of the node NODE1 itself written at the unused first half (bits b1-b4) of S1 byte. As will be described later, the last half (bits b5-b8) of the S1 byte is allocated for Synchronization Status Messages SSM to indicate the quality of timing clock as in the conventional case.

At the node NODE2, the sync clock is extracted from the signal having NODE-ID ① at S1 byte received from the node NODE1 to be selected as its local clock. The node NODE2 transmits signals having NODE-ID ① at S1 byte to the first and third nodes NODE1 and NODE3 according to the selected local clock. At the node NODE3, the sync clock is extracted from the signal having NODE-ID ① at S1 byte received from the node NODE2 to be selected as its local clock if the secondary clock CLKₛ is not used as the network synchronization clock. The node NODE3 transmits signals having NODE-ID ① at S1 byte to the second and fourth nodes NODE2 and NODE4 according to the selected local clock. Similarly, at the node NODE4, the sync clock is extracted from the signal having NODE-ID ① at S1 byte received from the node NODE3 to be selected as its local clock. The node NODE4 transmits signals having NODE-ID ① at S1 byte to the first and third nodes NODE1 and NODE3 according to the selected local clock.

In such a synchronization clock flow, each of the nodes NODE1-NODE4 is designed to select the clock having the highest quality according to SSM of S1 byte unless the NODE-ID written in the S1 byte of a received signal is coincident with the self node identification. If a plurality of clocks have the same quality, then it is designed to select one clock having the highest priority. The clockwise signal transmitted from each node includes the Synchronization Status Message SSM of '1111' indicating 'Do not use for synchronization'.

When the NODE-ID written in the S1 byte of a received signal is coincident with the node identification of its own, the node determines that the synchronization clock from the clock generator is active in the ring network and it should be selected as its local clock. More specifically, the first node NODE1 transmits signals having the node identification NODE-ID ① of its own to the second and fourth nodes NODE2 and NODE4 according to the local clock. Therefore, if the node NODE1 receives a signal having the node identification NODE-ID ① from the fourth nodes NODE4, then it is determined that the synchronization clock CLKₚ from the primary clock generator 101 is active in the ring network. In this case, the node NODE1 selects the synchronization clock CLKₚ as its local clock.

In the case of the third node NODE3, the NODE-ID ① written in the S1 byte of a received signal is not coincident with the node identification ③ of its own. Therefore, the third node NODE3 selects the clock having the highest quality according to SSM of S1 byte as in the case of other nodes NODE2 and NODE4.

As shown in Fig. 2B, assuming that defects 104 and 105 occur between the primary clock generator 101 and the first node NODE1 and between the first and second nodes NODE1 and NODE2 as shown in Fig. 2B. The defects 104 and 105 are detected by the first node NODE1 and the defect 105 is also detected by the second node NODE2. Since the defect 104 causes the primary clock CLKₚ not to be supplied to the node NODE1, the third node NODE3 activates the secondary clock generator 102 to provide the network synchronization instead of the primary clock generator 101. Therefore, the third node NODE3 selects the secondary clock CLKₛ as its local clock and transmits signals having the node identification NODE-ID ③ of its own written at the unused first half (bits b1-b4) of S1 byte to the second and fourth nodes NODE2 and NODE4 according to the local clock.

The second node NODE2 cannot receive a signal of sufficiently high quality from the first node NODE1 because the defect 105 causes the line quality to be significantly reduced. Therefore, the second node NODE2 selects as its local clock the clock extracted from the signal having the node identification NODE-ID ③ received from the third node NODE3. The node NODE2 transmits a signal having NODE-ID ③ at S1 byte to the third node NODE3 according to the selected local clock.

At the node NODE4, the sync clock is extracted from the signal having NODE-ID ③ at S1 byte received from the node NODE3 to be selected as its local clock. The node NODE4 transmits signals having NODE-ID ③ at S1 byte to the first and third nodes NODE1 and NODE3 according to the selected local clock.

The first node NODE1 cannot receive the primary clock CLKₚ having a sufficiently high quality from the primary clock generator 101. The first node NODE1 receives a signal having NODE-ID ③ at S1 byte received from the fourth node NODE4. Since the NODE-ID ③ written in the S1 byte of a received signal is not coincident with the node identification ① of its own, the first node NODE1 selects as its local clock the clock extracted from the signal having the node identification NODE-ID ③ received from the fourth node NODE4. The node NODE1 transmits a signal having NODE-ID ③ at S1 byte to the third node NODE3 according to the selected local clock.

In this manner, all nodes can operate according to the same synchronization timing in the ring network even when defects occur. No node is isolated from other nodes with respect to network synchronization. Further, at each node, a local clock is selected depending on whether the node identification of its own is identical to a node identification NODE-ID attached with a received signal, the timing design of the ring network is achieved with reducing in complexity.

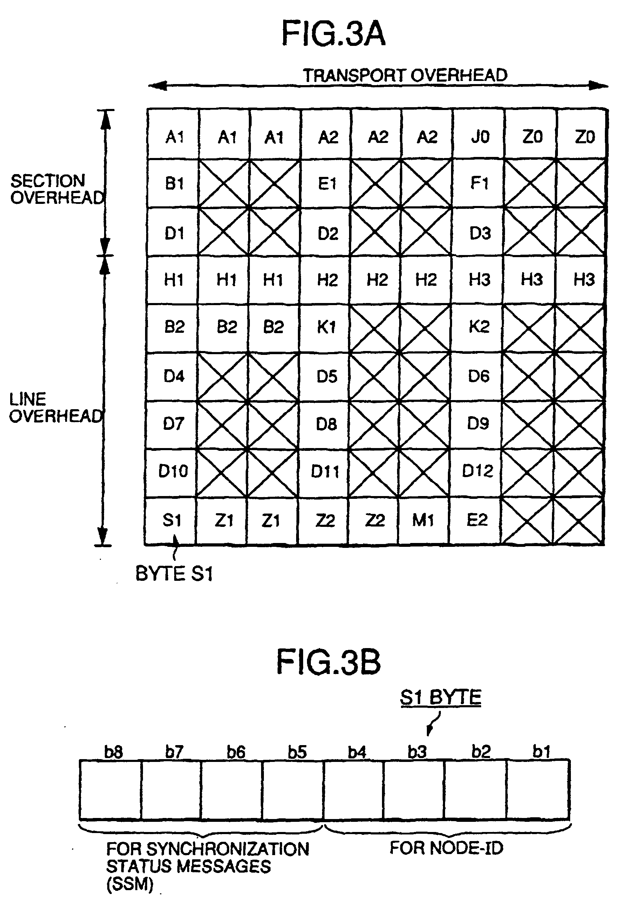

Referring to Fig. 3A, the byte S1 is allocated at the lowest line of the first column of the line overhead in the transport overhead. As shown in Fig. 3B, the byte S1 consists of 8 bits, b1 to b8 and the bits b1-b4 are allocated for node identification NODE-ID of the node that is supplying the ring network with the network synchronization clock. The node identification NODE-ID defined with 4 bits can identify 16 nodes at the maximum, which has been used in a general ring network. The remaining bits b5 to b8 of the S1 byte is allocated for Synchronization Status Messages SSM to indicate the quality level of timing clock. The predetermined assignment of bit patterns is given to the four synchronization levels agreed to within ITU-T.

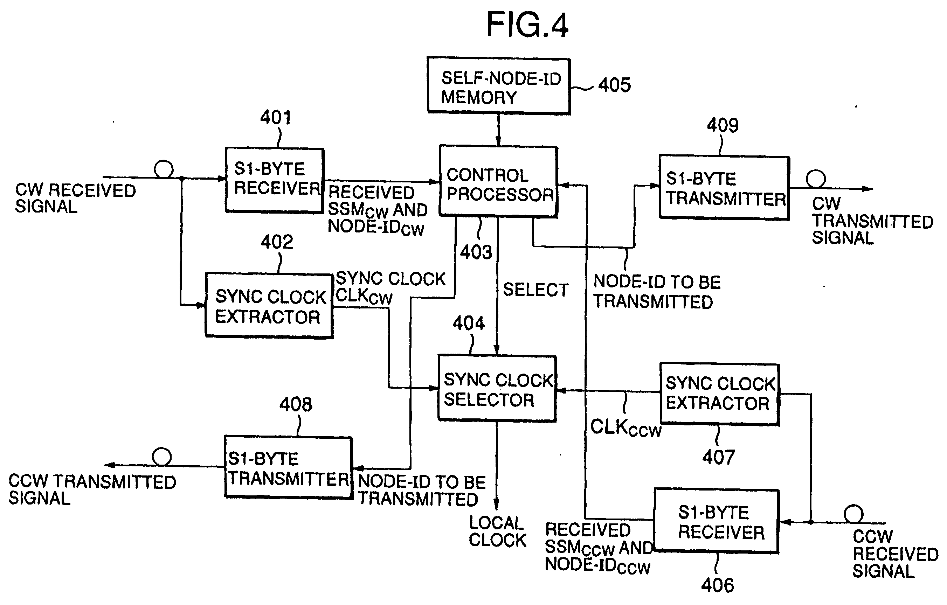

Referring to Fig. 4, at each of the nodes, a clockwise-received signal is input to an S1-byte receiver 401 and a synchronization clock extractor 402. The S1-byte receiver 401 reads a Synchronization Status Message SSM_{CW} from the bits b5-b8 of the S1 byte and a node identification NODE-ID_{CW} from the bits b1-b4 of the S1 byte of the clockwise-received signal. These clockwise-received SSM_{CW} and NODE-ID_{CW} are output to a control processor 403. The synchronization clock extractor 402 extracts a clockwise-received sync clock CLK_{CW} from the clockwise-received signal and outputs it to a synchronization clock selector 404. A node identification of its own (NODE-ID_{SELF}) has been stored in a memory 405.

Similarly, a counterclockwise-received signal is input to an S1-byte receiver 406 and a synchronization clock extractor 407. The S1-byte receiver 406 reads a Synchronization Status Message SSM_{CCW} from the bits b5-b8 of the S1 byte and a node identification NODE-ID_{CCW} from the bits b1-b4 of the S1 byte of the counterclockwise-received signal. These counterclockwise-received SSM_{CCW} and NODE-ID_{CCW} are output to the control processor 403. The synchronization clock extractor 407 extracts a counterclockwise-received sync clock CLK_{CCW} from the counterclockwise-received signal and outputs it to the synchronization clock selector 404.

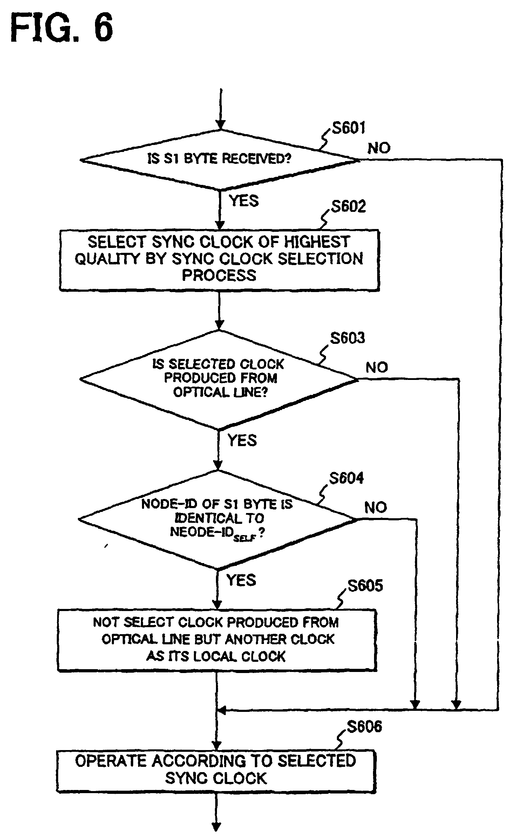

The control processor 403 performs clock selection control of the synchronization clock selector 404 by running a clock selection control program stored in a read-only memory (not shown). As will be described later, a received Synchronization Status Message (SSM) is checked and further a received NODE-ID is compared to the self-node identification NODE-ID_{SELF} (see Fig. 6). Under the control of the control processor 403, the synchronization clock selector 404 selects one of a plurality of clocks including the clockwise-received sync clock CLk_{CW} and the counterclockwise-received sync clock CLK_{CCW}. In the case of the first and third nodes NODE1 and NODE3, the synchronization clock selector 404 selects one of the input clock (CLK_{P} or CLK_{S}), the clockwise-received sync clock CLK_{CW} and the counterclockwise-received sync clock CLK_{CCW}. A selected synchronization clock is used as its local clock in the node.

The control processor 403 determines which one of a received NODE-ID and the self-node identification NODE-ID_{SELF}is to be transmitted. If the input clock (CLK_{P} or CLK_{S}) is used as the synchronization clock, the self-node identification NODE-ID_{SELF} is selected and output to both S1-byte transmitters 408 and 409. In the case where no input clock is provided or the input clock is not selected, the received NODE-ID corresponding to the highest-quality clock is selected and output to both S1-byte transmitters 406 and 409. The S1-byte transmitter 408 receives the selected node identification from the control processor 403 and then produces S1 byte having the selected node identification at bits b1-b4 thereof to transmit a counterclockwise signal including the S1 byte according to the selected local clock. Similarly, the S1-byte transmitter 409 receives the selected node identification from the control processor 403 and then produces S1 byte having the selected node identification at bits b1-b4 thereof to transmit a clockwise signal including the S1 byte according to the selected local clock.

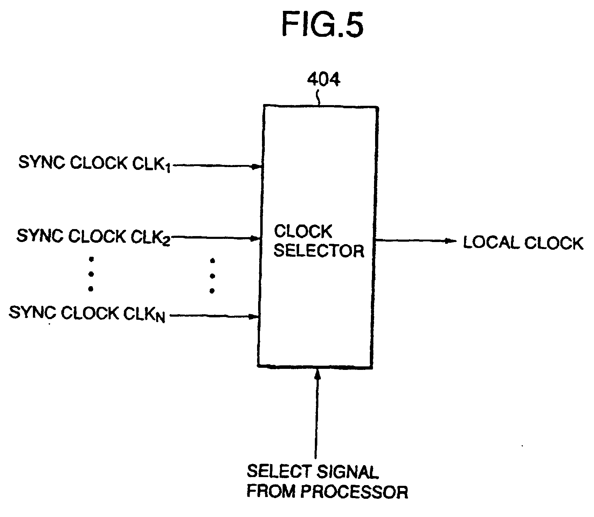

Referring to Fig. 5, the clock selector 404 may input a plurality of synchronization clocks CLK₁-CLK_{N} including the extracted clock or the input clock. One of them is selected as its local clock depending on the select signal received from the control processor 403.

### NODE CLOCK SELECTION

Referring to Fig. 6, when receiving the S1 byte consisting of Synchronisation Status Message SSM and node identification NODE-ID as shown in Fig. 3B (YES in step S601), the control processor 403 controls the synchronization clock selector 404 such that a synchronization clock having the highest quality level is selected as its local clock according to the received Synchronization Status Message SSM (step S602). Then it is determined whether the selected clock is produced from the signal carried on the optical transmission line (step S603). If it is produced from the received signal (YES in step S603), then it is further determined whether the NODE-ID of the received S1 byte is identical to the self-node identification NODE-ID_{SELF} stored in the memory 405 (step S604). If they are identical (YES in step S604), then the control processor 403 controls the synchronization clock selector 404 such that the synchronization clock selected in the step S603 is not selected but another clock as its local clock (step S605).

When the selected clock is not produced from the received signal carried on the optical transmission line (NO in step S603), when the NODE-ID of the received S1 byte is not identical to the self-node identification NODE-ID_{SELF} (NO in step S604) or when another clock is selected as its local clock (step S605), the node operates according to the selected local clock (step S606).

In the case of the third node NODE3, for example, when the ring network is normally operating as shown in Fig. 2A, the received S1 byte includes the NODE-ID ① which is not identical with the node identification ③ of its own. Therefore, the third node NODE3 selects the clock having the highest quality according to the received SSM of S1 byte as in the case of other nodes NODE2 and NODE4 (steps S601, S602, YES in S603, and NO in S604).

When the defects 104 and 105 occur as shown in Fig. 2B, however, the third node NODE3 activates the secondary clock generator 102 to provide the network synchronization instead of the primary clock generator 101. Therefore, the third node NODE3 selects the secondary clock CLK_{S} as its local clock and transmits signals having the node identification NODE-ID ③ of its own written at the bits b1-b4 of S1 byte to the second and fourth nodes NODE2 and NODE4 according to the local clock. In this case, the third node NODE3 receives signals having the node identification NODE-ID ③ of its own from the second and fourth nodes NODE2 and NODE4. However, these received signals include the Synchronization Status Message SSM of '1111' indicating 'Do not use for synchronization'.

In the case of the first node NODE1, when the ring network is normally operating as shown in Fig. 2A, the first node NODE1 activates the primary clock generator 101 to provide the network synchronization. Therefore, the first node NODE1 selects the primary clock CLK_{P} as its local clock and transmits signals having the node identification NODE-ID ① of its own written at the bits b1-b4 of S1 byte to the second and fourth nodes NODE2 and NODE4 according to the local clock. In this case, the S1 byte of the signal transmitted counterclockwise through the ring network includes the NODE-ID ① which is identical with the node identification ① of its own. Therefore, the first node NODE1 is designed not to select the clock extracted from the received signal (step S605).

When the defects 104 and 105 occur as shown in Fig. 2B, the first node NODE1 can receive a signal having a high-quality clock from only the fourth node NODE4 as shown in Fig. 2B. Further, the received signal has the node identification NODE-ID ③ written at the bits b1-b4 of S1 byte thereof. Therefore, in this case, the first node NODE1 performs clock selection control according to the received Synchronization Status Message SSM (steps S601, S602, YES in S603, and NO in S604). In other words, the clock extracted from the received signal from the fourth node NODE4 is selected as its local clock and thereby the first node NODE1 is not isolated from the network synchronization.

As described above, robust and stable network synchronization can be easily achieved only by transferring S1 byte including the node identification NODE-ID of a clock-supplying node attached with Synchronization Status Message SSM and checking it at each node. Therefore, compared with the prior art, the timing design of the network becomes very easy and the number of timing design steps is dramatically reduced.

In addition, even in the case of defect occurrence, any network element is prevented from isolating from the network synchronization, resulting in improved network stability and reliability.

Needless to say, the present invention can be applied to a ring network composed of five or more nodes each equipped with the same circuit configuration and operation as shown in Figs. 4 and 6. Further, the present invention can be applied to networks of other network topology such as linear topology.

## Claims

1. A network synchronization method for a synchronous network comprising a plurality of nodes (NODE1-NODE4) which are connected in a predetermined network topology and have unique codes respectively assigned thereto,
characterized by comprising the steps of:
at each of the nodes,
transmitting a signal to the synchronous network, the signal having a unique code for identifying a source node (NODE1, NODE3) of a current synchronization clock; and
selecting a local clock from a plurality of clocks depending on whether a unique code assigned to the node is identical to the unique code included in a received signal.

2. The network synchronization method according to claim 1, wherein a clock extracted from the received signal is not selected as the local clock when the unique code assigned to the node is identical to the unique code included in the received signal.

3. The network synchronization method according to claim 1 or 2, wherein a clock extracted from the received signal is selected as the local clock when the unique code assigned to the node is not identical to the unique code included in a received signal.

4. The network synchronization method according to claim 3, wherein a transmitted signal further has a message indicating a quality level of an extracted clock thereof and each of the nodes selects the local clock depending on the quality level of the received signal.

5. The network synchronization method according to any of claims 1-4, wherein the unique code for identifying a source node of a current synchronization clock is stored in an unused block of a header of a transmitted signal.

6. The network synchronization method according to claim 5, wherein the transmitted signal has an S1 byte in the header thereof, the S1 byte including the unique code for identifying the source node of the current synchronization clock and a message indicating a quality level of an extracted clock thereof.

7. An apparatus having a node identification code assigned thereto in a synchronous network composed of a plurality of nodes, characterized by comprising:
a transceiver (401, 406, 408, 409) for transmitting and receiving signals to and from the synchronous network, each of the signals having a node identification code for identifying a source node of a current synchronization clock; and
a clock selector (403-405), for selecting a local clock from a plurality of clocks depending on whether a node identification code assigned to the node is identical to the node identification code included in a received signal.

8. The apparatus according to claim 7, further comprising a clock extractor (402, 407) for extracting a clock from the received signal,
wherein the clock selector does not select the clock extracted from the received signal as the local clock when the node identification code assigned to the node is identical to the node identification code included in the received signal.

9. The apparatus according to claim 8, wherein the clock selector selects the clock extracted from the received signal as the local clock when the node identification code assigned to the node is not identical to the node identification code included in the received signal.

10. The apparatus according to claim 9, wherein each of the signals further has a message indicating a quality level of an extracted clock thereof, and the clock selector selects the local clock depending on the quality level of the received signal.

11. The apparatus according to any of claims 7-10, wherein the node identification code for identifying a source node of a current synchronization clock is stored in an unused block of a header of each of the signals.

12. The apparatus according to claim 11, wherein the transmitted signal has an S1 byte in the header thereof, the S1 byte including the node identification code for identifying the source node of the current synchronization clock and a message indicating a quality level of an extracted clock thereof.

13. A synchronous network system comprising a plurality of nodes which are connected in a predetermined network topology and have node identification codes respectively assigned thereto, each of the nodes characterized by comprising:
a transceiver (401, 406; 408, 409) for transmitting and receiving signals to and from the synchronous network, each of the signals having a node identification code for identifying a source node of a current synchronization clock; and
a clock selector (403-405) for selecting a local clock from a plurality of clocks depending on whether a node identification code assigned to the node is identical to the node identification code included in a received signal.

14. The synchronous network system according to claim 13, wherein the node further comprising a clock extractor (402, 407) or extracting a clock from the received signal,
wherein the clock selector does not select the clock extracted from the received signal as the local clock when the node identification code assigned to the node is identical to the node identification code included in the received signal.

15. The synchronous network system according to claim 14, wherein the clock selector selects the clock extracted from the received signal as the local clock when the node identification code assigned to the node is not identical to the node identification code included in the received signal.

16. The synchronous network system according to claim 15, wherein each of the signals further has a message indicating a quality level of an extracted clock thereof, and the clock selector selects the local clock depending on the quality level of the received signal.

17. The synchronous network system according to claim 13, wherein the node identification code for identifying a source node of a current synchronization clock is stored in an unused block of a header of each of the signals.

18. The synchronous network system according to claim 17, wherein the transmitted signal has an S1 byte in the header thereof, the S1 byte including the node identification code for identifying the source node of the current synchronization clock and a message indicating a quality level of an extracted clock thereof.

19. The synchronous network system according to claim 13, wherein the nodes are connected in a ring network topology.
